# EUROPÄISCHE PATENTSCHRIFT

(11) **EP 3 557 598 B1**
(45) Veröffentlichungstag und Bekanntmachung des Hinweises auf die Patenterteilung: **28.10.2020**
(21) Anmeldenummer: 18168566.0
(22) Anmeldetag: 20.04.2018
(51) Int. Cl.: H01H 9/22, F16P 3/08

(54) **SICHERHEITSSCHALTER**
SAFETY SWITCH
COMMUTATEUR DE SÉCURITÉ

(43) Veröffentlichungstag der Anmeldung: 23.10.2019
(73) Patentinhaber: EUCHNER GmbH + Co. KG, 70771 Leinfelden-Echterdingen (DE)
(72) Erfinder: Siefert, Timo, 70771 Leinfelden-Echterdingen (DE); Joos, Melissa, 70771 Leinfelden-Echterdingen (DE); Hahn, Frederic, 40764 Langenfeld (DE); Zeiler, Gerd, 70771 Leinfelden-Echterdingen (DE)
(74) Vertreter: Ruckh, Rainer Gerhard

(56) Entgegenhaltungen:
- EP-A1- 3 133 447
- DE-B3-102011 051 629
- US-A1- 2013 314 231

## Beschreibung

Die Erfindung betrifft einen Sicherheitsschalter.

Sicherheitsschalter werden im Bereich der Sicherheitstechnik eingesetzt, wobei diese insbesondere zur Gefahrenbereichsabsicherung an Anlagen eingesetzt werden. Der Begriff Anlagen umfasst insbesondere auch Maschinen, Arbeitsgeräte und dergleichen.

Beispielsweise können derartige Sicherheitsschalter mit Transpondern arbeiten, wobei anhand der Transpondersignale erkannt werden kann, ob eine trennende Schutzeinrichtung wie zum Beispiel eine Tür als Zugang zu einer Anlage geschlossen ist oder nicht.

Ein derartiger Sicherheitsschalter weist generell eine Ein-/Ausgangsstruktur mit Eingängen und Ausgängen auf, die insbesondere redundant ausgebildet sein kann. Der Sicherheitsschalter generiert entsprechend seiner Überwachungsfunktion, insbesondere in Abhängigkeit des Transpondersignals, ein Schaltsignal, das an eine Steuerung ausgegeben wird, mit dem die zu überwachende Anlage gesteuert wird. Wird mit dem Sicherheitsschalter ein gefahrloser Zustand detektiert, insbesondere, dass eine zu überwachende Tür geschlossen ist und so den Zugang zu einem Gefahrenbereich versperrt, in dem zum Beispiel die Anlage angeordnet ist, wird ein Schaltsignal mit dem Schaltzustand "eingeschalteter Zustand", entsprechend einer aktiven Sicherheitsbedingung, das heißt einem Freigabesignal, generiert. Empfängt die Steuerung vom Sicherheitsschalter dieses Freigabesignal, kann die Steuerung die Anlage in Betrieb nehmen beziehungsweise in Betrieb lassen. Wird mit dem Sicherheitsschalter jedoch eine offene Tür registriert, generiert dieser ein Schaltsignal mit dem Schaltzustand "ausgeschalteter Zustand", entsprechend einer nicht aktiven Sicherheitsbedingung. In diesem Fall schaltet der Sicherheitsschalter zur Vermeidung gefahrbringender Zustände die Anlage aus.

Insbesondere zur Erfüllung komplexerer Überwachungsaufgaben kann eine Reihenschaltung mit mehreren Sicherheitsschaltern eingesetzt werden. Jeder Sicherheitsschalter kann dabei einen separaten Bereich, beispielsweise zur Absicherung einer Anlage, überwachen. Dabei generiert jeder Sicherheitsschalter ein entsprechendes Schaltsignal, das er mit dem eingelesenen Schaltsignal des vorangehenden Sicherheitsschalters in der Reihe verknüpft und dann an den nächsten Sicherheitsschalter der Reihe weitergibt. Eine Freigabe des Betriebs der Anlage durch die Steuerung erfolgt dann nur, wenn alle Sicherheitsschalter ein Freigabesignal generieren. Typischerweise bilden die Sicherheitsschalter in der Reihenschaltung Slaves einer Master-Slave-Anordnung. Bei einer derartigen Master-Slave-Anordnung erfolgt generell ein Diagnosebetrieb derart, dass der Master zyklisch oder azyklisch Daten, insbesondere Sensor- oder Schalterdaten abfragt.

Die US 2013/0314231 A1 betrifft ein Sicherheits-Detektionssystem mit einer Reihenanordnung von Sicherheitsdetektoren. Die Sicherheitsdetektoren sind über eine Diagnoseleitung verbunden. Jeder Sicherheitsdetektor generiert Diagnoseinformationen und sendet diese an den nächsten Sicherheitsdetektor, bis der letzte, an ein Diagnosemodul angeschlossene Sicherheitsdetektor, erreicht ist. So werden Diagnoseinformationen aller Sicherheitsdetektoren gesammelt und dem Diagnosemodul zugeführt, wo diese ausgewertet werden. Auch die Startphase dieser Anordnung wird vom Diagnosemodul kontrolliert.

Der Erfindung liegt die Aufgabe zugrunde, eine Reihenschaltung von Sicherheitsschaltern mit erweiterter Funktionalität bereitzustellen.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft eine Reihenschaltung mit mehreren Sicherheitsschaltern. Die Reihenschaltung weist eine die Sicherheitsschalter verbindende Verdrahtung auf. Von den Sicherheitsschaltern sind Signale ausgebbar, wobei in Abhängigkeit des Registrierens dieser Signale durch weitere Sicherheitsschalter der Reihenschaltung erfasst wird, ob die Verdrahtung zum Anschluss eines Masters ausgebildet ist und ob ein solcher Master angeschlossen und kommunikationsfähig ist. In Abhängigkeit hierzu ist der Betrieb der Sicherheitsschalter entsprechend vorgegeben.

Die Erfindung betrifft weiterhin ein entsprechendes Verfahren.

Ein wesentlicher Vorteil der Erfindung besteht darin, dass die Sicherheitsschalter selbst durch eine Analyse der Rücklesbarkeit von Signalen weiterer Sicherheitsschalter die Konfiguration der Reihenschaltung selbsttätig ermitteln können und ihren Betrieb dementsprechend einrichten und durchführen können. Damit wird eine hohe Funktionalität der erfindungsgemäßen Reihenschaltung erzielt.

Je nachdem, ob die Sicherheitsschalter der Reihenschaltung in ein Master-Slave-System eingebunden sind oder nicht, sind unterschiedliche Verdrahtungen der Reihenschaltung zur Verbindung der Sicherheitsschalter vorgesehen. Abhängig von diesen unterschiedlichen Verdrahtungen variiert die Rücklesbarkeit von Signalen eines Sicherheitsschalters in die weiteren Sicherheitsschalter, wodurch eindeutig erkannt wird, ob die Reihenschaltung für einen Master-Slave-Betrieb ausgelegt ist oder nicht. Weiterhin kann durch Registrieren von Signalen eines Masters, die sich von Signalen der Sicherheitsschalter als Slaves in einem Master-Slave-System unterscheiden, eindeutig erkannt werden, ob ein Master an die Sicherheitsschalter angeschlossen ist.

Da diese Anschlussarten von den Sicherheitsschaltern erkannt und voneinander unterschieden werden können, können die Sicherheitsschalter daraufhin selbsttätig ihre Betriebsart anpassen.

Da die Sicherheitsschalter für einen Einsatz in der Sicherheitstechnik ausgebildet sind, weist jeder Sicherheitsschalter eine redundante Eingangs- und Ausgangsstruktur auf, über welche in den Sicherheitsschaltern generierte Schaltsignale übertragbar sind. Zur Ausbildung der Reihenschaltung sind redundante Ausgänge eines Sicherheitsschalters mit redundanten Eingängen eines folgenden Sicherheitsschalters verbunden.

Die Schaltsignale stellen dabei sicherheitsrelevante Signale dar, deren Schaltzustand den aktuellen Überwachungszustand einer zu überwachenden Einheit, wie zum Beispiel einer trennenden Schutzeinrichtung, insbesondere einer Schutztür, mit der der Zugang zu einem Gefahrenbereich verschlossen werden kann, angibt.

Der Betrieb einer mit den Sicherheitsschaltern gesicherten Anlage erfolgt nur dann, wenn jeder Sicherheitsschalter ein Freigabesignal als Schaltsignal erzeugt. Dabei generiert ein Sicherheitsschalter sein Schaltsignal abhängig vom aktuellen Überwachungszustand und auch abhängig vom Schaltsignal, das vom vorgeordneten Sicherheitsschalter generiert und in diesen eingelesen wurde. Das im Sicherheitsschalter generierte Schaltsignal wird dann an den nachgeordneten Sicherheitsschalter der Reihe weitergegeben, bis schließlich das am Ausgang der Reihenschaltung anstehende Schaltsignal der Steuerung zugeführt wird.

Weiterhin weist jeder Sicherheitsschalter einen Kommunikationsanschluss auf. Nur bei einer Auslegung für einen Betrieb der Reihenschaltung mit einem Master ist von jedem Kommunikationsanschluss eine Leitung auf eine Diagnoseleitung geführt. Die Kommunikation kann bidirektional erfolgen.

Dabei ist der Master an die Diagnoseleitung anschließbar. Die Slaves sind folglich parallel zum Master verdrahtet.

Über die Diagnoseleitung werden sowohl sicherheitsrelevante, als auch nichtsicherheitsrelevante Daten übertragen. Diese Diagnoseleitung wird insbesondere in einem Master-Slave-Betrieb genutzt, damit der Master die von den Sicherheitsschaltern gebildeten Slaves ansteuern und/oder insbesondere zyklisch oder azyklisch abfragen kann.

Erfindungsgemäß werden die über die Diagnoseleitung übertragenen Daten in den Sicherheitsschaltern dazu genutzt, um zu prüfen, ob die Reihenschaltung für einen Betrieb mit einem Master ausgelegt ist oder nicht.

Dabei wird ausgenutzt, dass bei einer Auslegung für einen Master-Slave-Betrieb die von einem Sicherheitsschalter über den Kommunikationsanschluss ausgesendeten Daten den anderen Sicherheitsschaltern über die Diagnoseleitung zur Verfügung gestellt werden. Ist die Reihenschaltung jedoch nicht für einen Master-Slave-Betrieb ausgelegt, werden die Kommunikationsanschlüsse als Meldeausgänge genutzt und sind nicht über die Diagnoseleitung verbunden. Melde- und/oder Diagnosedaten werden von einem Sicherheitsschalter über den Kommunikationsanschluss nicht den anderen Sicherheitsschalter zur Verfügung gestellt, sondern direkt an eine externe Einheit, insbesondere die Steuerung, ausgegeben. Damit kann durch eine Überprüfung, ob von den Sicherheitsschaltern über den Kommunikationsanschluss ausgegebene Daten den anderen Sicherheitsschaltern zur Verfügung gestellt werden, einfach und sicher ermittelt werden, ob die Reihenschaltung für einen Master-Slave-Betrieb ausgelegt ist oder nicht.

Gemäß einer vorteilhaften Ausgestaltung werden während einer Inbetriebnahmephase von jedem Sicherheitsschalter Testpattern generiert, anhand derer die Position des jeweiligen Sicherheitsschalters in der Reihenschaltung bestimmt ist. Diese Inbetriebnahmephase ist insbesondere die Hochlaufphase bei jedem Gerätestart vor Beginn der Normalbetriebsphase, dem sogenannten Arbeitsbetrieb. Informationen aus den Testpattern, das heißt die Informationen über die Positionswerte der Sicherheitssensoren in der Reihenschaltung, werden zur Ermittlung der Verdrahtung genutzt.

Die Vergabe der Positionswerte und damit der Adressen der Sicherheitsschalter in der Reihenschaltung wird durch die Sicherheitsschalter selbst initiiert, indem sie über mindestens einen Ausgang, der insbesondere als Sicherheitsausgang ausgebildet ist, ein Testpattern in Form eines Pulses aussenden. Nach dem Senden des Pulses prüft jeder Sicherheitsschalter an mindesten einem Eingang, der insbesondere als Sicherheitseingang ausgebildet ist, ob ein Puls, welcher ein Testpattern bildet, empfangen wird.

Der erste Sicherheitsschalter der Reihenschaltung, dessen Eingänge zum Beispiel an einen Brückenschalter angeschlossen sind, erhält an seinem mindestens einen Eingang ein statisches Eingangssignal. Damit identifiziert sich dieser Sicherheitsschalter als erster Sicherheitsschalter der Reihenschaltung und sendet als Ausgangssignal ein Testpattern in Form eines Pulses über seinen mindestens einen Ausgang zum nächsten Sicherheitsschalter der Reihenschaltung. Dieser Sicherheitsschalter liest diesen Puls als Testpattern an mindestens einem seiner Eingänge ein, identifiziert sich als zweiten Sicherheitsschalter in der Reihenschaltung und sendet dementsprechend zwei Pulse als Testpattern über seinen mindestens einen Ausgang zum nächsten Sicherheitsschalter. Dies wird fortgesetzt, bis jeder Sicherheitsschalter anhand seines Testpatterns, das heißt der durch die Zahl der Pulse bestimmten Position in der Reihenschaltung, adressiert ist. Die Informationen über diese Testpattern werden dann über den Kommunikationsanschluss des jeweiligen Sicherheitsschalters ausgegeben.

Da während der dem Arbeitsbetrieb vorausgehenden Inbetriebnahmephase anhand der Testpattern die Verdrahtung und damit die Ausbildung der Reihenschaltung ermittelt wird, kann auch die Einstellung der Betriebsart der Sicherheitsschalter während der Inbetriebnahmephase erfolgen, so dass die Sicherheitsschalter der Reihenschaltung an die vorhandene Reihenschaltung angepasst sind und ihren Betrieb ohne weitere Anpassungen aufnehmen können. Dadurch ist es möglich, einen Sicherheitsschalter während des Betriebs der Reihenschaltung auszutauschen.

Für den Fall, dass während der Inbetriebnahmephase die Sicherheitsschalter keine Informationen über die Testpattern von weiteren Sicherheitsschaltern empfangen, gehen die Sicherheitsschalter selbsttätig in einen Betrieb ohne Master über und betreiben die Kommunikationsanschlüsse als Meldeausgänge.

Da die Informationen über die Testpattern eines Sicherheitsschalters von den anderen Sicherheitsschaltern, vorzugsweise innerhalb eines vorgegebenen time-out Zeitintervalls, nicht erkannt werden, wird erkannt, dass die Kommunikationsanschlüsse nicht an die Diagnoseleitung angeschlossen sind, so dass kein Master-Slave-Betrieb möglich ist.

In den Sicherheitsschaltern erfolgt dann eine selbsttätige Umkonfigurierung der Kommunikationsanschlüsse in Meldeausgänge, so dass über diese direkt eine Kommunikation mit einer externen Einheit, wie zum Beispiel der die zu sichernde Anlage steuernden Steuerung, erfolgen kann.

Für den Fall, dass während der Inbetriebnahmephase Informationen über die Testpattern der Sicherheitsschalter von den weiteren Sicherheitsschaltern und einem an die Diagnoseleitung angeschlossenen Master empfangen werden, wird die Vergabe der Positionen der Sicherheitsschalter in der Reihenschaltung durch den Master überwacht.

In diesem Fall wird anhand der Informationen über die Testpattern, beziehungsweise allgemein der über die Diagnoseleitung zur Verfügung gestellten Signale nicht nur erkannt, dass die Reihenschaltung für einen Master-Slave-Betrieb ausgelegt ist, sondern dass auch ein Master an die Sicherheitsschalter angeschlossen und kommunikationsbereit ist.

In diesem Fall werden die in den Informationen über die Testpattern kodierten Positionswerte an den Master weitergegeben, so dass die Anzahl der Sicherheitsschalter und derer Positionen innerhalb der Reihenschaltung im Master bekannt sind.

Die Positionen werden von dem Master als Adressen übernommen, unter welchen der Master die Sicherheitsschalter als Slaves im Master-Slave-Betrieb anspricht.

Für den Fall, dass während der Inbetriebnahmephase kein Master an die Diagnoseleitung angeschlossen oder der angeschlossene Master nicht betriebsbereit ist und die Informationen über die Testpattern der Sicherheitsschalter von den weiteren Sicherheitsschaltern empfangen werden, überwacht ein ausgewählter Sicherheitsschalter die Vergabe der Positionen der Sicherheitsschalter in der Reihenschaltung.

Anhand der von den Sicherheitsschaltern auf die Diagnoseleitung ausgegebenen Informationen über die Testpattern wird somit die Auslegung der Reihenschaltung als Master-Slave-System erkannt. Jedoch ist während der Inbetriebnahmephase kein Master an die Sicherheitsschalter angeschlossen und/oder betriebsbereit.

Bei bekannten derartigen Master-Slave-Systemen kann dieses ohne den Master nicht gestartet werden. Demgegenüber ist die Funktionalität des erfindungsgemäßen Systems dahingehend erweitert, dass es auch ohne den Master gestartet werden kann.

Der ausgewählte Sicherheitsschalter übernimmt dabei vorübergehend die Master-Funktionalität, wobei zweckmäßig der ausgewählte Sicherheitsschalter derjenige Sicherheitsschalter ist, der die erste Position in der Reihenschaltung einnimmt.

Der ausgewählte Sicherheitsschalter registriert durch die Informationen über die Testpattern der anderen Sicherheitsschalter wie viele Sicherheitsschalter an die Reihenschaltung angeschaltet werden.

Nach erfolgter Vergabe der Positionen sendet der ausgewählte Sicherheitsschalter die Anzahl aller Sicherheitsschalter als Broadcast Signal aus, wobei der Master diese Anzahl übernimmt, sobald er an die Reihenschaltung angeschlossen und betriebsbereit ist.

Diese Vorgehensweise hat den Vorteil, dass bei Anschluss des Masters an die Reihenschaltung dieser ohne Unterbrechung des Betriebs des Gesamtsystems seine Steuerungsfunktion als Master wahrnehmen kann. Da der Master das Broadcast Signal vom ausgewählten Sicherheitsschalter erhält, ist im Master die Anzahl der angeschlossenen Slaves bekannt, so dass der Master die Sicherheitsschalter als Slaves zyklisch oder azyklisch abfragen kann, wobei dann die Slaves, insbesondere auch der ausgewählte Sicherheitsschalter, nur noch auf Anfrage des Masters antworten, das heißt Signale über den Kommunikationsanschluss aussenden.

Die Erfindung wird im Folgenden anhand der Zeichnungen erläutert. Es zeigen:
- Figur 1:: Ausführungsbeispiel der erfindungsgemäßen Reihenschaltung von Sicherheitsschaltern.
- Figur 2a - d:: Zeitdiagramm von Testpattern der Sicherheitsschalter der Reihenschaltung gemäß Figur 1.

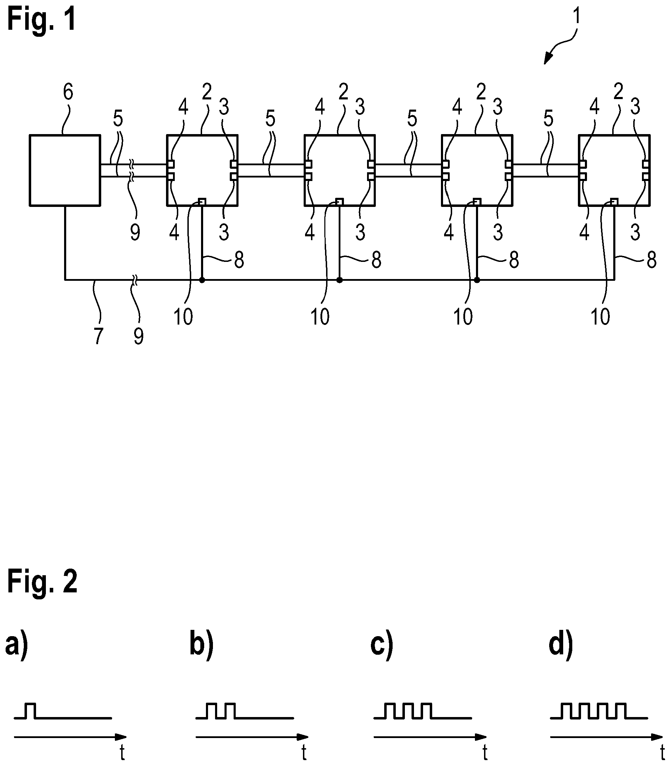

Figur 1 zeigt stark schematisiert ein Ausführungsbeispiel der erfindungsgemäßen Reihenschaltung 1 bestehend aus einer Mehrfachanordnung von Sicherheitsschaltern 2.

Figur 1 zeigt dabei eine Reihenschaltung 1 von vier identisch ausgebildeten Sicherheitsschaltern 2. Die Sicherheitsschalter 2 müssen jedoch nicht zwingend identisch sein. Generell kann die Reihenschaltung 1 auch eine andere Anzahl von Sicherheitsschaltern 2 aufweisen. Schließlich kann auch ein einzelner Sicherheitsschalter 2 eingesetzt werden.

Die Sicherheitsschalter 2 werden im Bereich der Sicherheitstechnik eingesetzt. Insbesondere wird mit einem Sicherheitsschalter 2 überwacht, ob eine trennende Schutzeinrichtung, wie zum Beispiel eine Tür, den Zugang zu einem Gefahrenbereich, in welchem eine gefahrbringende Anlage angeordnet ist, geschlossen ist. Die Schließstellung der Tür kann dabei anhand von Transpondersignalen kontrolliert werden. Dabei kann ein Transponder in einem Betätiger angeordnet sein, der an Tür angeordnet ist und mit dieser beweglich angeordnet ist. Der Sicherheitsschalter 2 ist dann an einem den Zugang begrenzenden Rahmen angeordnet. Wenn sich die Tür in der Schließstellung befindet, ist der Transponder im Lesebereich eines im Sicherheitsschalter 2 angeordneten RFID-Lesegeräts, so dass dieses die Transpondersignale des Transponders empfangen kann.

Jeder Sicherheitsschalter 2 weist eine redundante Eingangsstruktur mit zwei Eingängen 3 und eine redundante Ausgangsstruktur mit zwei Ausgängen 4 auf, über welche in den Sicherheitsschaltern 2 generierte Schaltsignale als sicherheitsrelevante Signale, in Abhängigkeit derer eine Freigabe oder ein Abschalten der Anlage erfolgt, weitergegeben werden, so dass diese in einer übergeordneten Steuerung verarbeitet werden. Die Eingänge 3 sind als Sicherheitseingänge ausgebildet, die Ausgänge 4 sind als Sicherheitsausgänge ausgebildet.

In der Reihenschaltung 1 gemäß Figur 1 sind die Ausgänge 4 eines Sicherheitsschalters 2 über Leitungen 5 jeweils mit den Eingängen 3 des jeweils nachfolgenden Sicherheitsschalters 2 verbunden. Die Ausgänge 4 des letzten Sicherheitsschalters 2 sind an einen Master 6 angeschlossen.

Der Master 6 kann beispielsweise als Sicherheitsrelais oder als I/O Modul wie ein I/O Link Modul ausgebildet sein. Der Master 6 dient einerseits zum Anschluss an eine übergeordnete Steuerung, die den Betrieb der zu überwachenden Anlage steuert. Weiterhin steuert der Master 6 das Master-Slave-System, das neben diesem Master 6 die Sicherheitsschalter 2 als Slaves aufweist. Hierzu sind die Sicherheitsschalter 2 und der Master 6 über eine Diagnoseleitung 7 verbunden. Jeder Sicherheitsschalter 2 weist dabei einen Kommunikationsanschluss 10 auf, von dem eine weitere Leitung 8 zur Diagnoseleitung 7 geführt ist.

Während des Arbeitsbetriebs der Reihenschaltung 1 übernimmt jeder Sicherheitsschalter 2 seine Überwachungsfunktion und generiert dementsprechend ein Schaltsignal, das mit dem Schaltsignal des vorhergehenden Sicherheitsschalters 2 (falls vorhanden), welches über die Leitung 5 eingelesen wird, verknüpft wird und dann an den nächsten Sicherheitsschalter 2 über die Leitungen 5 weitergegeben wird. Der letzte Sicherheitsschalter 2 gibt dann ein Schaltsignal an den Master 6 weiter, das dieser der Steuerung zur Verfügung stellt. Die Steuerung gibt darauf den Betrieb der Anlage nur frei, wenn von sämtlichen Sicherheitsschaltern 2 der Reihenschaltung 1 ein Freigabesignal generiert wurde.

Alternativ zu der in Figur 1 dargestellten Variante, bei der die Reihenschaltung 1 ein Master-Slave-System bildet, können die Kommunikationsanschlüsse 10 der Sicherheitsschalter 2 auch nicht an die Diagnoseleitung 7 angeschlossen sein, sondern über die Leitungen 8 direkt an eine externe Einheit, insbesondere an die Steuerung.

Während der Hochlaufphase bei jedem Gerätestart, im Folgenden Inbetriebnahmephase genannt, welcher dem Arbeitsbetrieb, das heißt der Normalbetriebsphase vorangeht, erfolgt die Adressierung der einzelnen Sicherheitsschalter 2 in der Reihenschaltung 1.

Die Vergabe der Positionswerte und damit der Adressen der Sicherheitsschalter 2 in der Reihenschaltung 1 wird durch die Sicherheitsschalter 2 selbst initiiert, indem sie über mindestens einen Ausgang 4, der insbesondere als Sicherheitsausgang ausgebildet ist, ein Testpattern in Form eines Pulses aussenden. Nach dem Senden des Pulses prüft jeder Sicherheitsschalter 2 an mindestens einem Eingang 3, der insbesondere als Sicherheitseingang ausgebildet ist, ob ein Testpattern in Form eines Pulses empfangen wird.

Der erste Sicherheitsschalter 2 der Reihenschaltung 1 (in Figur 1 ganz rechts), dessen Eingänge zum Beispiel an einen Brückenschalter angeschlossen sind, erhält in seinem mindestens einen Eingang ein statisches Eingangssignal. Damit identifiziert sich dieser Sicherheitsschalter 2 als erster Sicherheitsschalter 2 der Reihenschaltung 1 und sendet als Ausgangssignal ein Testpattern in Form eines Pulses über seinen mindestens einen Ausgang 4 zum nächsten Sicherheitsschalter 2 der Reihenschaltung 1. Dieser Sicherheitsschalter 2 liest diesen Puls als Testpattern an seinem mindestens einen Eingang 3 ein, identifiziert sich als zweiter Sicherheitsschalter 2 in der Reihenschaltung 1 und sendet dementsprechend zwei Pulse als Testpattern über mindestens einen seiner Ausgänge 4 zum nächsten Sicherheitsschalter 2. Dies wird fortgesetzt, bis jeder Sicherheitsschalter 2 anhand seines Testpatterns, das heißt der durch die Zahl der Pulse bestimmten Position in der Reihenschaltung 1, adressiert ist. Die Testpattern der einzelnen Sicherheitsschalter 2 sind in den Figuren 2a - d dargestellt. Die Informationen über diese Testpattern werden dann über den Kommunikationsanschluss 10 des jeweiligen Sicherheitsschalters 2 ausgegeben.

Die unterschiedlichen Konfigurationen der Reihenschaltung 1 werden erfindungsgemäß von den Sicherheitsschaltern 2 selbsttätig während der Inbetriebnahmephase erkannt. Hierzu werden Informationen über die Testpattern verwendet, die über die Kommunikationsanschlüsse 10 der einzelnen Sicherheitsschalter ausgegeben werden. Die Informationen beinhalten die Position des jeweiligen Sicherheitsschalters.

Bildet die Reihenschaltung 1 kein Master-Slave-System, das heißt sind die Kommunikationsanschlüsse 10 nicht an die Diagnoseleitung 7 angeschlossen, so werden die Informationen über die Testpattern nicht über die Diagnoseleitung 7 zur Verfügung gestellt. Nachdem innerhalb eines vorgegebenen time-out Zeitintervalls die Sicherheitsschalter 2 keine Testpattern von den anderen Sicherheitsschaltern 2 erhalten, schalten alle Sicherheitsschalter 2 die Konfiguration der Kommunikationsanschlüsse 10 auf einen Meldeausgang um, so dass diese direkt mit der externen Einheit kommunizieren können.

Bildet die Reihenschaltung 1, wie in Figur 1 dargestellt, ein Master-Slave-System, so wird dieses während der Inbetriebnahmephase von den Sicherheitsschaltern 2 dadurch erkannt, dass diese während der Inbetriebnahmephase von den jeweils anderen Sicherheitsschaltern 2 erkannt werden.

Für den Fall, dass während der Inbetriebnahmephase der Master 6 an die Reihenschaltung 1 angeschlossen ist (wie in Figur 1 dargestellt), überwacht der Master 6 die Positionsvergabe der Sicherheitsschalter 2 und verwendet anschließend die Positionen als Adressen, unter welchen er die Sicherheitsschalter 2 als Slaves im Master-Slave-Betrieb anspricht.

Für den Fall, dass während der Inbetriebnahmephase der Master 6 noch nicht an die Reihenschaltung 1 angeschlossen ist oder der Master noch nicht betriebsbereit ist (wie mit den Unterbrechungen 9 in Figur 1 angedeutet), kann der Betrieb der Reihenschaltung 1, das heißt auch ohne Master 6, gestartet werden.

In diesem Fall wird die Positionsvergabe der Sicherheitsschalter 2 durch den ersten Sicherheitsschalter 2 überwacht, indem dieser die Informationen über die Testpattern der anderen Sicherheitsschalter 2 registriert und speichert. Der erste Sicherheitsschalter 2 als ausgewählter Sicherheitsschalter 2 übernimmt damit vorübergehend die Masterfunktionalität.

Nachdem der ausgewählte Sicherheitsschalter 2 die Positionen aller an die Reihenschaltung 1 angeschlossenen Sicherheitsschalter 2 registriert hat, was dadurch festgestellt wird, dass nach einer vorgegebenen Zeit keine neuen Informationen über die Testpattern mehr eingehen, sendet der ausgewählte Sicherheitsschalter 2 die Anzahl der in der Reihenschaltung 1 als Broadcast Signale auf die Diagnoseleitung 7. Sobald der Master 6 an die Reihenschaltung 1 angeschlossen und hochgefahren ist, übernimmt er die Anzahl der angeschlossenen Sicherheitsschalter 2 und übernimmt auch die Masterfunktion in der Reihenschaltung 1. Der Master 6 fragt dann die Sicherheitsschalter 2 unter ihrer Adresse, das heißt Positionen, die die Sicherheitsschalter 2 als Slaves an den Master 6 melden, zyklisch oder azyklisch ab. Die Slaves, insbesondere der ausgewählte Sicherheitsschalter 2, reagieren dann nur noch auf Anfragen des Masters 6.

### Bezugszeichenliste

- (1): Reihenschaltung
- (2): Sicherheitsschalter
- (3): Eingang
- (4): Ausgang
- (5): Leitung
- (6): Master
- (7): Diagnoseleitung
- (8): Leitung
- (9): Unterbrechung
- (10): Kommunikationsanschluss

## Patentansprüche

1. Reihenschaltung (1) mit mehreren Sicherheitsschaltern (2), wobei die Reihenschaltung (1) eine die Sicherheitsschalter (2) verbindende Verdrahtung aufweist, wobei von den Sicherheitsschaltern (2) Signale ausgebbar sind, **dadurch gekennzeichnet, dass** in Abhängigkeit des Registrierens dieser Signale durch weitere Sicherheitsschalter (2) der Reihenschaltung (1) erfassbar ist, ob die Verdrahtung zum Anschluss eines Masters (6) ausgebildet ist und ob ein solcher Master (6) angeschlossen ist, und dass in Abhängigkeit hierzu der Betrieb der Sicherheitsschalter (2) entsprechend vorgegeben ist.

2. Reihenschaltung (1) nach Anspruch 1, **dadurch gekennzeichnet, dass** jeder Sicherheitsschalter (2) einen Kommunikationsanschluss (10) aufweist, wobei nur bei einer Auslegung für einen Betrieb der Reihenschaltung (1) mit einem Master (6) von jedem Kommunikationsanschluss (10) eine Leitung (8) auf eine Diagnoseleitung (7) geführt ist.

3. Reihenschaltung (1) nach Anspruch 2, **dadurch gekennzeichnet, dass** in einem Sicherheitsschalter (2) über den Kommunikationsanschluss (10) ausgegebene Signale den weiteren Sicherheitsschaltern (2) zugeführt sind.

4. Reihenschaltung (1) nach einem der Ansprüche 2 oder 3, **dadurch gekennzeichnet, dass** der Master (6) an die Diagnoseleitung (7) anschließbar ist.

5. Reihenschaltung (1) nach einem der Ansprüche 2 bis 4, **dadurch gekennzeichnet, dass** bei einer Auslegung für einen Betrieb ohne Master (6) die Kommunikationsanschlüsse (10) der Sicherheitsschalter (2) als Meldeausgänge betrieben sind.

6. Reihenschaltung (1) nach einem der Ansprüche 1 bis 5, **dadurch gekennzeichnet, dass** während einer Inbetriebnahmephase von jedem Sicherheitsschalter (2) Testpattern generiert werden, anhand derer die Position des jeweiligen Sicherheitsschalters (2) in der Reihenschaltung (1) bestimmt ist, wobei die Informationen über die Testpattern zur Ermittlung der Verdrahtung der Reihenschaltung (1) herangezogen sind.

7. Reihenschaltung (1) nach Anspruch 6, **dadurch gekennzeichnet, dass** über die Diagnoseleitung (7) Informationen über die Testpattern übertragen werden, wobei diese Informationen zur Ermittlung der Verdrahtung herangezogen werden.

8. Reihenschaltung (1) nach Anspruch 7, **dadurch gekennzeichnet, dass** für den Fall, dass während der Inbetriebnahmephase die Sicherheitsschalter (2) keine Informationen über Testpattern von weiteren Sicherheitsschaltern (2) empfangen, die Sicherheitsschalter (2) selbsttätig in einen Betrieb ohne Master (6) übergehen und den Kommunikationsanschluss (10) als Meldeausgang betreiben.

9. Reihenschaltung (1) nach einem der Ansprüche 7 oder 8, **dadurch gekennzeichnet, dass** für den Fall, dass während der Inbetriebnahmephase Informationen über Testpattern der Sicherheitsschalter (2) von den weiteren Sicherheitsschaltern (2) und einem an die Diagnoseleitung (7) angeschlossenen Master (6) Informationen über die Testpattern empfangen werden, die Vergabe der Positionen der Sicherheitsschalter (2) in der Reihenschaltung (1) durch den Master (6) überwacht wird.

10. Reihenschaltung (1) nach einem der Ansprüche 7 oder 9, **dadurch gekennzeichnet, dass** für den Fall, dass während der Inbetriebnahmephase kein Master (6) an die Diagnoseleitung (7) angeschlossen ist und die Informationen über Testpattern der Sicherheitsschalter (2) von den weiteren Sicherheitsschaltern (2) empfangen werden, ein ausgewählter Sicherheitsschalter (2) die Vergabe der Positionen der Sicherheitsschalter (2) in der Reihenschaltung (1) überwacht.

11. Reihenschaltung (1) nach Anspruch 10, **dadurch gekennzeichnet, dass** der ausgewählte Sicherheitsschalter (2) derjenige Sicherheitsschalter (2) ist, der die erste Position in der Reihenschaltung (1) einnimmt.

12. Reihenschaltung (1) nach einem der Ansprüche 8 oder 9, **dadurch gekennzeichnet, dass** nach erfolgter Vergabe der Positionen der ausgewählte Sicherheitsschalter (2) die Anzahl aller Sicherheitsschalter (2) als Broadcast Signal aussendet, wobei der Master (6) diese Anzahl übernimmt, sobald er an die Reihenschaltung (1) angeschlossen ist.

13. Reihenschaltung (1) nach einem der Ansprüche 6 bis 12, **dadurch gekennzeichnet, dass** das Testpattern jedes Sicherheitsschalters (2) eine Pulsfolge mit einer die Position des jeweiligen Sicherheitsschalters (2) in der Reihenschaltung (1) kodierenden Anzahl von Pulsen enthält.

14. Reihenschaltung (1) nach einem der Ansprüche 1 bis 13, **dadurch gekennzeichnet, dass** jeder Sicherheitsschalter (2) eine redundante Eingangs- und Ausgangsstruktur aufweist, über welche in den Sicherheitsschaltern (2) generierte Schaltsignale übertragbar sind, wobei zur Ausbildung der Reihenschaltung (1) redundante Ausgänge (4) eines Sicherheitsschalters (2) mit redundanten Eingängen (3) eines folgenden Sicherheitsschalters (2) verbunden sind.

15. Verfahren zum Betrieb einer Reihenschaltung (1) mit mehreren Sicherheitsschaltern (2), wobei die Reihenschaltung (1) eine die Sicherheitsschalter (2) verbindende Verdrahtung aufweist, wobei von den Sicherheitsschaltern (2) Signale ausgegeben werden, **dadurch gekennzeichnet, dass** in Abhängigkeit der Registrierung dieser Signale durch weitere Sicherheitsschalter (2) der Reihenschaltung (1) erfasst wird, ob die Verdrahtung zum Anschluss eines Masters (6) ausgebildet ist und ob ein solcher Master (6) angeschlossen ist, und dass in Abhängigkeit hierzu der Betrieb der Sicherheitsschalter (2) entsprechend vorgegeben ist.

## Claims

1. Series circuit (1) with a plurality of safety switches (2), wherein the series circuit (1) comprises wiring connecting the safety switches (2), wherein signals can be output by the safety switches (2), **characterised in that** depending on the registration of the signals by further safety switches (2) of the series circuit (1) it is detectable whether the wiring is configured for connection of a master (6) and whether such a master (6) is connected and the operation of the safety switches (2) is correspondingly predetermined in dependence thereon.

2. Series circuit (1) according to claim 1, **characterised in that** each safety switch (2) has a communications terminal (10), wherein a line (8) is led from each communications terminal (10) to a diagnostic line (7) only in the case of a layout for operation of the series circuit (1) with a master (6).

3. Series circuit (1) according to claim 2, **characterised in that** signals issued in a safety switch (2) by way of the communications terminal (10) are fed to the further safety switches (2).

4. Series circuit (1) according to one of claims 2 and 3, **characterised in that** the master (6) is connectible with the diagnostic line (7).

5. Series circuit (1) according to any one of claims 2 to 4, **characterised in that** in the case of a layout for operation without a master (6) the communications terminals (10) of the safety switches (2) are operated as reporting outputs.

6. Series circuit (1) according to any one of claims 1 to 5, **characterised in that** during a phase of placing in operation test patterns, on the basis of which the position of the respective safety switch (2) in the series circuit (1) is determined, are generated by each safety switch (2), wherein the data about the test patterns are utilised for determination of the wiring of the series circuit (1).

7. Series circuit (1) according to claim 6, **characterised in that** data about the test patterns are transmitted by way of the diagnostic line (7), wherein these data are utilised for determining the wiring.

8. Series circuit (1) according to claim 7m, **characterised in that** for the case that, during the phase of placing in operation, the safety switches (2) do not receive any data about test patterns from further safety switches (2) the safety switches (2) automatically transfer to operation without a master (6) and operate the communications terminal (10) as a reporting output.

9. Series circuit (1) according to one of claims 7 and 8, **characterised in that**, for the case that during the phase of placing in operation, data about test patterns of the safety switches (2) are received from the further safety switches (2) and data about the test patterns are received at a master (6), which is connected with the diagnostic line (7), the allocation of the positions of the safety switches (2) in the series circuit (1) is monitored by the master (6).

10. Series circuit (1) according to one of claims 7 and 9, **characterised in that** for the case that, during the phase of placing in operation, no master (6) is connected with diagnostic line (7) and the data about test patterns of the safety switches (2) are received from the further safety switches (2) a selected safety switch (2) monitors the allocation of the positions of the safety switch (2) in the series circuit (1).

11. Series circuit (1) according to claim 10, **characterised in that** the selected safety switch (2) is that safety switch (2) which occupies the first position in the series circuit (1).

12. Series circuit (1) according to one of claims 8 and 9, **characterised in that** after allocation of the positions has been carried out the selected safety switch (2) transmits the number of all safety switches (2) as a broadcast signal, wherein the master (6) takes over this number as soon as it is connected with the series circuit (1).

13. Series circuit (1) according to any one of claims 6 to 12, **characterised in that** the test pattern of each safety switch (2) contains a pulse train with a number of pulses coding the position of the respective safety switch (2) in the series circuit (1).

14. Series circuit (1) according to any one of claims 1 to 13, **characterised in that** each safety switch (2) has a redundant input and output structure, by way of which switching signals generated in the safety switches (2) are transmissible, wherein for formation of the series circuit (1) redundant outputs (4) of a safety switch (2) are connected with redundant inputs (3) of a following safety switch (2).

15. Method of operating a series circuit (1) with a plurality of safety switches (2), wherein the series circuit (1) comprises wiring connecting the safety switches (2) and wherein signals are output by the safety switches (2), **characterised in that** depending on the registration of these signals it is detected by further safety switches (2) of the series circuit (1) whether the wiring is configured for connection of a master (6) and whether such a master is connected and that operation of the safety switches (2) is correspondingly predetermined in dependence thereon.

## Revendications

1. Branchement en série (1) comprenant plusieurs interrupteurs de sécurité (2), ledit branchement en série (1) étant muni d'un câblage raccordant lesdits interrupteurs de sécurité (2), sachant que des signaux peuvent être émis par lesdits interrupteurs de sécurité (2), **caractérisé par** la faculté de détecter en fonction de l'enregistrement de ces signaux, par l'intermédiaire d'autres interrupteurs de sécurité (2) du branchement en série (1), si le câblage est conçu pour la connexion d'un élément dominant (6), et si un tel élément dominant (6) est raccordé ; et par le fait que l'actionnement desdits interrupteurs de sécurité (2) est préétabli, de façon correspondante, en fonction de ces considérations.

2. Branchement en série (1) selon la revendication 1, **caractérisé par le fait que** chaque interrupteur de sécurité (2) est pourvu d'une connexion de communication (10), sachant qu'une ligne (8) est guidée vers une ligne de diagnostic (7), par chaque connexion de communication (10), uniquement dans le cas d'une conception pour un fonctionnement dudit branchement en série (1) avec un élément dominant (6).

3. Branchement en série (1) selon la revendication 2, **caractérisé par le fait que** des signaux, émis dans un interrupteur de sécurité (2) par l'intermédiaire de la connexion de communication (10), sont délivrés aux autres interrupteurs de sécurité (2).

4. Branchement en série (1) selon l'une des revendications 2 ou 3, **caractérisé par le fait que** l'élément dominant (6) peut être raccordé à la ligne de diagnostic (7).

5. Branchement en série (1) selon l'une des revendications 2 à 4, **caractérisé par le fait que**, dans le cas d'une conception pour un fonctionnement sans élément dominant (6), les connexions de communication (10) des interrupteurs de sécurité (2) sont actionnées comme des sorties de notification.

6. Branchement en série (1) selon l'une des revendications 1 à 5, **caractérisé par le fait que**, durant une phase de mise en fonction, chaque interrupteur de sécurité (2) engendre des modèles de test à l'appui desquels il s'opère une détermination de l'emplacement de l'interrupteur de sécurité (2) considéré, dans ledit branchement en série (1), les informations relatives auxdits modèles de test étant prises en compte pour la spécification du câblage dudit branchement en série (1).

7. Branchement en série (1) selon la revendication 6, **caractérisé par le fait que** des informations relatives aux modèles de test sont transmises par l'intermédiaire de la ligne de diagnostic (7), ces informations étant prises en compte pour la spécification du câblage.

8. Branchement en série (1) selon la revendication 7, **caractérisé par le fait que**, pour le cas où les interrupteurs de sécurité (2) ne reçoivent pas d'informations relatives à des modèles de test et émanant d'autres interrupteurs de sécurité (2), durant la phase de mise en fonction, lesdits interrupteurs de sécurité (2) passent automatiquement à un fonctionnement sans élément dominant (6) et actionnent la connexion de communication (10) comme une sortie de notification.

9. Branchement en série (1) selon l'une des revendications 7 ou 8, **caractérisé par le fait que**, pour le cas où des informations, relatives à des modèles de test des interrupteurs de sécurité (2), sont reçues par les autres interrupteurs de sécurité (2) et par un élément dominant (6) raccordé à la ligne de diagnostic (7), durant la phase de mise en fonction, l'attribution des emplacements desdits interrupteurs de sécurité (2), dans ledit branchement en série (1), est surveillée par ledit élément dominant (6).

10. Branchement en série (1) selon l'une des revendications 7 ou 9, **caractérisé par le fait que**, pour le cas où aucun élément dominant (6) n'est raccordé à la ligne de diagnostic (7) et où les informations relatives à des modèles de test des interrupteurs de sécurité (2) sont reçues par les autres interrupteurs de sécurité (2), durant la phase de mise en fonction, un interrupteur de sécurité (2) sélectionné surveille l'attribution des emplacements desdits interrupteurs de sécurité (2) dans ledit branchement en série (1).

11. Branchement en série (1) selon la revendication 10, **caractérisé par le fait que** l'interrupteur de sécurité (2) sélectionné est l'interrupteur de sécurité (2) qui occupe le premier emplacement dans ledit branchement en série (1).

12. Branchement en série (1) selon l'une des revendications 8 ou 9, **caractérisé par le fait que**, lorsque l'attribution des emplacements a été opérée, l'interrupteur de sécurité (2) sélectionné envoie le nombre de tous les interrupteurs de sécurité (2), sous la forme d'un signal de diffusion, l'élément dominant (6) prenant ce nombre en charge aussitôt qu'il est raccordé audit branchement en série (1).

13. Branchement en série (1) selon l'une des revendications 6 à 12, **caractérisé par le fait que** le modèle de test de chaque interrupteur de sécurité (2) renferme une suite d'impulsions comptant un nombre d'impulsions qui code l'emplacement de l'interrupteur de sécurité (2) considéré, dans ledit branchement en série (1).

14. Branchement en série (1) selon l'une des revendications 1 à 13, **caractérisé par le fait que** chaque interrupteur de sécurité (2) présente une structure d'entrées et de sorties redondantes, par l'intermédiaire de laquelle des signaux de commutation engendrés dans les interrupteurs de sécurité (2) peuvent être transmis, sachant que, pour réaliser ledit branchement en série (1), des sorties redondantes (4) d'un interrupteur de sécurité (2) sont reliées à des entrées redondantes (3) d'un interrupteur de sécurité (2) successif.

15. Procédé d'actionnement d'un branchement en série (1) comprenant plusieurs interrupteurs de sécurité (2), ledit branchement en série (1) étant muni d'un câblage raccordant lesdits interrupteurs de sécurité (2), sachant que des signaux sont émis par lesdits interrupteurs de sécurité (2), **caractérisé par** la détection en fonction de l'enregistrement de ces signaux, par l'intermédiaire d'autres interrupteurs de sécurité (2) du branchement en série (1), en vue d'établir si le câblage est conçu pour la connexion d'un élément dominant (6), et si un tel élément dominant (6) est raccordé ; et par le fait que l'actionnement desdits interrupteurs de sécurité (2) est préétabli, de façon correspondante, en fonction de ces considérations.
